Europäisches Patentamt

European Patent Office

Office européen des brevets

(19)

(11) Veröffentlichungsnummer: **0 192 205 B1**

(12) # EUROPÄISCHE PATENTSCHRIFT

(45) Veröffentlichungstag der Patentschrift: **23.09.92**

(51) Int. Cl.⁵: **A22B 5/00**, A22B 7/00

(21) Anmeldenummer: **86101919.8**

(22) Anmeldetag: **14.02.86**

(54) **Schlachtvieh-Abstechvorrichtung.**

(30) Priorität: **15.02.85 DE 8504352 U**
**04.10.85 DE 8528345 U**

(43) Veröffentlichungstag der Anmeldung:
**27.08.86 Patentblatt 86/35**

(45) Bekanntmachung des Hinweises auf die
Patenterteilung:
**23.09.92 Patentblatt 92/39**

(84) Benannte Vertragsstaaten:
**AT BE CH DE FR GB IT LI NL SE**

(56) Entgegenhaltungen:
**DE-A- 2 606 911**
**DE-B- 1 237 008**
**GB-A- 821 581**
**US-A- 3 132 374**

(73) Patentinhaber: **Banss Maschinenfabrik GmbH
& Co. KG
Industriestrasse 4
W-3560 Biedenkopf(DE)**

(72) Erfinder: **Runkel, Gerhard
Berliner Strasse 13
W-6347 Angelbruck-Gönnern(DE)**
Erfinder: **Brunet, Hans
Rosengarten 10
W-3550 Marburg(DE)**

(74) Vertreter: **Klunker . Schmitt-Nilson . Hirsch
Winzererstrasse 106
W-8000 München 40(DE)**

## Beschreibung

Die Erfindung bezieht sich auf ein Verfahren zum Bewegen von mittels Traghaken an einem Bewegungsbahnabschnitt hängenden Schlachttieren im Abstechbereich eines Schlachthofs.

Üblicherweise beinhaltet der Arbeitsablauf in einem Schlachthof das Betäuben der Schlachttiere, das anschließende Anhängen der Schlachttiere mit dem Kopf nach unten an Traghaken, das Abstechen der Schlachttiere durch Öffnen eines großen Blutgefäßes in deren Halsbereich und das Fördern der abgestochenen Schlachttiere zu oder durch mehrere Bearbeitungsstationen, wie gegebenenfalls Enthäuten, Halbieren, Ausweiden und dergleichen. Ab dem Anhängen der Schlachttiere erfolgt deren Bewegung an den Traghaken hängend längs einer Bewegungsbahn, die wegen ihres Aufbaus aus Rohren üblicherweise Rohrbahn genannt wird. Dabei gleiten oder rollen die Traghaken auf der Rohrbahn entlang.

Bisher hat man denjenigen Bewegungsabschnitt, in dem das Abstechen der Schlachttiere erfolgt, häufig mit einer Abwärtsneigung in Traghakenbewegungsrichtung ausgebildet, damit von einer oder mehreren Schlachtern die Schlachttiere der Reihe nach abgestochen und ohne übergroßen Kraftaufwand weitergeschoben werden konnten. Hinter diesem Abstechbereich der Bewegungsbahn setzte dann eine Förderung der an den Traghaken hängenden Schlachttiere durch eine Förderkette, die üblicherweise über Mitnehmer auf die Traghaken einwirkte, ein. Es hat sich gezeigt, daß die Arbeitsbedingungen für das Abstechen recht ungünstig sind, weil die Schlachttiere mit wechselnden Abständen und mit undefinierter Geschwindigkeit entlangkommen und häufig von Hand weitergeschoben werden müssen. Die Verhältnisse sind besonders ungünstig, wenn - wie das häufig der Fall ist - mehrere Schlachter nebeneinander das Abstechen besorgen.

Aus dem Dokument GB-A-821 581 ist eine Schlachthof-Fördereinrichtungsbaueinheit bekannt, bei der Mitnehmer eines Kettenförderers hinter die Traghaken für die Schlachttiere greifen. Diese Fördereinrichtungsbaueinheit ist nicht für denjenigen Bewegungsbahnabschnitt vorgesehen, wo die Schlachttiere abgestochen werden.

Der Erfindung liegt die Aufgabe zugrunde, günstigere, geordnetere, leichtere Arbeitsbedingungen für die Schlachter beim Abstechen, insbesondere auch im Fall mehrerer nebeneinander stehender Schlachter, zu schaffen.

Zur Lösung dieser Aufgabe ist das Verfahren erfindungsgemäß dadurch gekennzeichnet, daß die Schlachttiere während des Abstechens mittels einer nahe dem Bewegungsabschnitt angeordneten, antreibend auf die Traghaken einwirkenden Fördereinrichtungsbaueinheit weiterbewegt werden.

Bei der Erfindung hat man es also nicht mehr mit undefinierten Gleit- oder Rollbewegungen der Traghaken längs des Abstech-Bewegungsbahnabschnitts zu tun, sondern mit einer gezielten Förderung der Schlachttiere mittels der Fördereinrichtungsbaueinheit. Dabei stellen sich entsprechend dem Ankommen immer neuer Schlachttiere am Anfang der Fördereinrichtungsbaueinheit definierte, während der Schlachttierbewegung mittels der Fördereinrichtungsbaueinheit im wesentlichen gleichbleibende Schlachttierabstände ein, auch wenn diese nicht notwendigerweise von Schlachttier zu Schlachttier gleich sind. Für den oder die Schlachter ist der Bewegungsvorgang jedes Schlachttieres im Verlaufe der Antriebseinwirkung durch die Fördereinrichtungsbaueinheit vorhersehbar, so daß er sich mit der Abstechtätigkeit darauf einstellen kann. Es versteht sich, daß die Fördereinrichtungsbaueinheit vorzugsweise so langsam läuft, daß der jeweilige Schlachter während des Abstechens an einer Stelle stehenbleiben kann. Die Ausbildung der Fördereinrichtung als Baueinheit hat den Vorteil, daß diese im Herstellerwerk vormontiert werden und insgesamt an der Schlachtstrecke angebracht werden kann, daß bei der Planung von Schlachthöfen bei der Auslegung der Schlachtstrecke keine besondere Berücksichtigung der Fördereinrichtung erforderlich ist, daß eine Nachrüstmöglichkeit vorhandener Schlachthöfe gegeben ist, und daß wenig bzw. auf einen kompakten Raum konzentrierter Platz für die Fördereinrichtung benötigt wird.

Die Fördereinrichtungsbaueinheit ist vorzugsweise an der Rohrbahn und/oder einem Träger angebracht, der zum Führen einer der anschließenden Bewegungsbahn zugeordneten Transportkette vorhanden ist. Es ist aber auch eine andere Anbringung der Fördereinrichtungsbaueinheit möglich, insbesondere an anderen vorhandenen Konstruktionsteilen der Schlachtstrecke oder an der Schlachthofdecke.

Das bevorzugte Weiterbewegung der Schlachttiere während des Abstechens mittels eines endlosen, antreibbaren, mit Mitnehmern versehenen Zugförderers mit einem im wesentlichen parallel zu dem Bewegungsbahnabschnitt verlaufenden Zugfördererabschnitt hat den Vorteil, daß die Schlachttiere in definierten Schlachttierabständen gefördert werden, so daß sich der bzw. die Schlachter mit der Abstechtätigkeit noch besser auf den Rhythmus des Vorbeikommens von abzustechenden Schlachttieren einstellen können. In der Regel werden die Schlachttierabstände entsprechend den Mitnehmerabständen gleich sein; höchstens Unregelmäßigkeiten im Ankommen neuer Schlachttiere können dazu führen, daß einzelne Mitnehmer unbesetzt von Schlachttieren sind.

Wenn man, wie bevorzugt, die Mitnehmer gegen Federkraft beweglich am Zugförderer anbringt oder in sich elastisch gestaltet, ist insbesondere bei Stauungen vor oder hinter der Fördereinrichtungsbaueinheit dennoch eine geordnete Förderung der Schlachttiere in dem Bewegungsabschnitt möglich, weil sich die Mitnehmer bei Überschreiten eines bestimmten Verschiebungswiderstandes über einzelne Traghaken hinbewegen können. Noch ein weiterer Vorteil der Schlachttierförderung in dem Abstechbereich mittels Mitnehmern besteht darin, daß die einzelnen Schlachttiere dort in der Regel nicht miteinander in Kontakt kommen, so daß auch unter dem Gesichtspunkt der Vermeidung der Kontamination gesunder Schlachttiere mit kranken Schlachttieren das Optimum getan ist.

Alternativ ist das Weiterbewegen der Schlachttiere während des Abstechens mittels eines reibschlüssigen Riemenantriebs bevorzugt, was konstruktiv und herstellungsmäßig sehr einfach und für den rauhen Schlachthofbetrieb besonders geeignet ist. Der Riemenantrieb hat ferner den Vorzug, daß jedes ankommende Schlachttier sofort gefördert wird, ohne daß eine formschlüssige Mitnahme durch Mitnehmer oder dergleichen erforderlich wäre. Schließlich ist günstig, daß der Anfang des Riemens gleichsam als Bremse wirkt, wenn ein neues Schlachttier mit höherer Geschwindigkeit ankommt. Es versteht sich, daß der Begriff "im wesentlichen parallel" auch die exakte Parallelanordnung von Riemenabschnitt und Bewegungsbahnabschnitt deckt.

Die bevorzugte Neigung des Bewegungsbahnabschnitts vor und hinter der Fördereinrichtungsbaueinheit stellt eine bevorzugte Möglichkeit der Zuförderung und der Abförderung der Schlachttiere vom Bereich der Fördereinrichtungsbaueinheit dar. Im eigentlichen Bereich der Fördereinrichtungsbaueinheit ist der Bewegungsbahnabschnitt vorzugsweise horizontal, kann aber auch zur Erleichterung der Förderung leicht nach unten geneigt sein.

Das erfindungsgemäße Verfahren findet vorzugsweise beim Abstechen von Schweinen Anwendung.

Die Erfindung und Ausgestaltungen der Erfindung werden im folgenden zeichnerisch dargestellter Ausführungsbespiele noch näher erläutert. Es zeigen:

Figur 1    eine Seitenansicht eines erfindungsgemäßen Abstechbereichs;

Figur 2    eine Draufsicht auf den Abstechbereich von Fig. 1;

Figur 3    einen senkrechten Schnitt längs A-B in Fig. 1, wobei eine Fördereinrichtungsbaueinheit in vergrößertem Maßstab in Frontansicht zu sehen ist;

Figur 4    in einer Schnittdarstellung analog Fig. 3, allerdings in einem kleineren Maßstab, einen abgewandelten Abstechbereich, bei dem statt eines Kettenförderers mit Mitnehmern ein Riemenantrieb vorgesehen ist.

Nachfolgend wird die Fördereinrichtungsbaueinheit kurz als Baueinheit bezeichnet und wird der Zugfördererabschnitt kurz als Förderabschnitt bezeichnet.

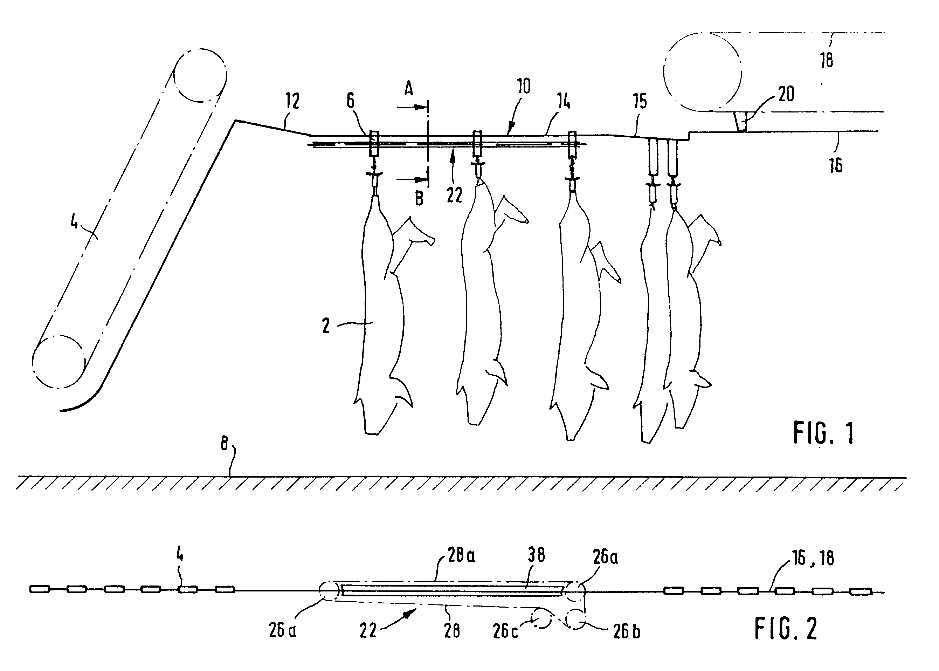

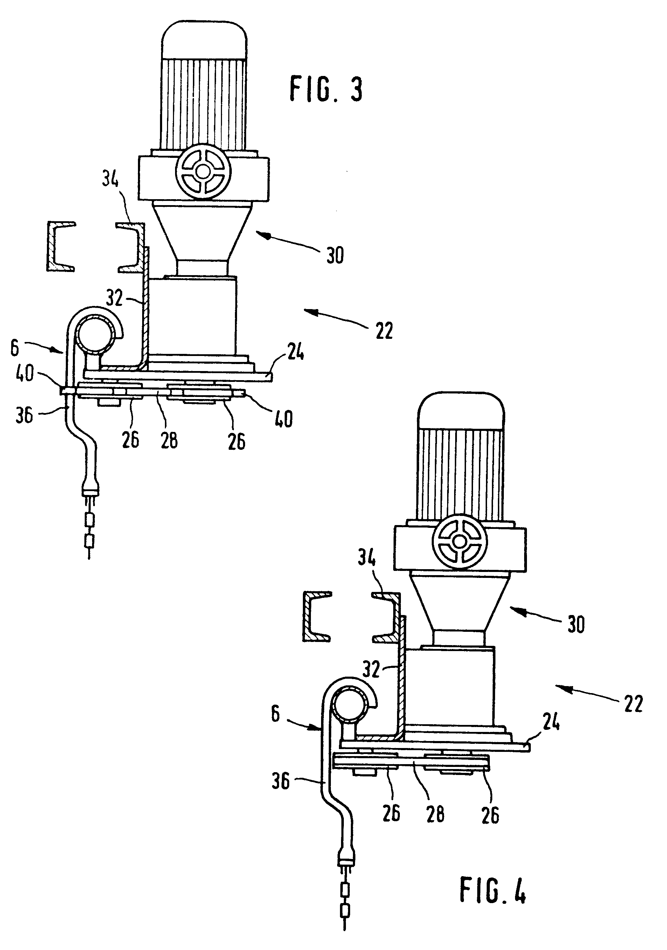

Die Zeichnungen zeigen ein Ausführungsbeispiel am Beispiel einer Schlachtlinie für Schweine. Aus Übersichtsgründen ist in den Fig. 1 und 2 die Baueinheit nur schematisch und insbesondere ohne Antriebsmotor eingezeichnet, während in Fig. 3 die Baueinheit vollständiger eingezeichnet ist.

In Fig. 1 und 2 ist die Bewegungsrichtung der Schweine 2 von links nach rechts. Links außerhalb der Fig. 1 findet die, beispielsweise elektrische, Betäubung der Schweine 2 statt. Mit 4 ist ein sogenannter Stechelevator bezeichnet, der die Schweine 2, die zuvor jeweils an einem Fuß an einem Traghaken 6 angehängt worden sind, so weit schräg aufwärts fördert, daß sie mit dem Kopf nach unten frei über dem Schlachthofboden 8 hängen können. An den Stechelevator 4 schließt sich ein Rohrbahnabschnitt 10 an, der in einem ersten, relativ kurzen Bereich 12 in Bewegungsrichtung der Traghaken 6 mit den Schweinen 2 nach unten geneigt verläuft, in seinem zweiten, längeren Bereich 14 waagerecht verläuft und in seinem dritten Bereich 15 wieder nach unten geneigt verläuft. Am Ende des Rohrbahnabschnittes 10 befindet sich eine nicht eingezeichnete, sogenannte Einhebevorrichtung, mit der die Traghaken 6 der Reihe nach auf eine weiterführende Rohrbahn 16 übergehoben werden, wo sie durch an einer Förderkette 18 befestigte Mitnehmer 20 der Reihe nach weitergefördert werden.

Vom Ende des ersten Bereichs 12 des Rohrbahnabschnitts 10 bis zum Beginn des dritten Bereichs 15 des Rohrbahnabschnitts 10 erstreckt sich eine Baueinheit 22. Die Baueinheit 22 besteht, wie in Fig.3 am deutlichsten ersichtlich, im wesentlichen aus einer Basisplatte 24, insgesamt vier Rädern 26, die an der Unterseite der Basisplatte 24 gelagert sind und deren Ebenen parallel zur Basisplatte 24 sind, einer um die vier Räder 26 geführten, endlosen Kette 28, sowie einem elektrischen, in seiner Abtriebsdrehzahl stufenlos einstellbaren Getriebemotor 30, der von oben an der Basisplatte 24 angeschraubt ist. Die gesamte Baueinheit 22 ist über ihre Basisplatte 24 mit geeigneten Befestigungsteilen 32 teils von unten am Rohrbahnabschnitt 10 und teils an einem Längsträger 34 befestigt, der oberhalb des Rohrbahnabschnitts 10 verläuft und beispielsweise eine rückwärtige Verlängerung eines Trägers zum Führen der Transportkette 18 sein kann. Auch eine vollständige Befestigung der Baueinheit 22 ausschließlich am Rohrbahnabschnitt 10 ist möglich und in vielen Fällen sogar bevorzugt. Die Basisplatte 24 ist horizontal angeordnet.

Von den Kettenrädern 26 befinden sich zwei Umlenkräder 26a etwa unterhalb des Rohrbahnabschnitts 10, befindet sich ein Antriebsrad 26b ein Stück seitlich beabstandet von einem der beiden Umlenkräder 26a, und befindet sich ein Spannrad 26c zwischen dem Antriebsrad 26b und dem weiter von diesem entfernten Umlenkrad 26a. Das Antriebsrad 26b ist auf die nicht eingezeichnete Abtriebswelle des Antriebsmotors 30, die sich durch die Basisplatte 24 von oben nach unten durcherstreckt, aufgekeilt. Die Kette 28 bildet zwischen den beiden Umlenkrädern 26a einen Förderabschnitt 28a, der sich parallel zum Bereich 14 des Rohrbahnabschnitts 10 erstreckt. Die seitliche Beabstandung des Antriebsrads 26b schafft genügend Raum zur Unterbringung des Antriebsmotors 30 seitlich neben dem Rohrbahnabschnitt.

Fig. 3 zeigt, daß die Traghaken 6 mit einem oberen, halbrunden Abschnitt oben über den Rohrbahnabschnitt 10 greifen und darauf entlangrutschen können. Von diesem oberen Traghakenabschnitt reicht ein mittlerer Traghakenabschnitt 36 im wesentlichen senkrecht nach unten. Dort schließt sich ein unterer, S-förmig gekrümmter Traghakenabschnitt an, der im unteren Endbereich im wesentlichen senkrecht und vertikal unterhalb der Mittelachse des Rohrbahnabschnitts 10 verläuft. Daran hängt eine Kette, die um einen Fuß des jeweiligen Schweins 2 geschlungen ist. Der mittlere Traghakenabschnitt 36 verläuft auf der der Baueinheit 22 entgegengesetzten Seite des Rohrbahnabschnitts 10.

Man erkennt ferner in Fig.3, daß Mitnehmer 40 des Förderabschnitts 28a von der Seite her jeweils mit dem mittleren Traghakenabschnitt 36 in Eingriff stehen. Die Lage des Förderabschnitts 28a relativ zum Rohrbahnabschnitt 10 kann so festgelegt sein, daß der Förderabschnitt 28a eine leichte Tendenz hat, die Traghaken 6 seitlich wegzudrücken und damit das untere Ende der Traghaken aus der Lage vertikal unterhalb der Längsachse des Rohrbahnabschnitts 10 etwas herauszubringen. Auf diese Weise werden die Traghaken 6 durch das vertikal wirkende Gewicht des jeweiligen Schweins 2 in Richtung Zugförderer 28 gedrückt. In Fig.2 erkennt man eine parallel zum Förderabschnitt 28a verlaufende Stützschiene 38, die die traghakenabgewandte Rückseite des Förderabschnitts 28a gleitend unterstützt.

Einzeln der Reihe nach mit dem Stechelevator 4 nach oben geförderte Traghaken 6 mit daran hängenden Schweinen 2 gelangen zunächst auf den ersten, stärker geneigten Bereich 12 des Rohrbahnabschnitts 10, auf dem sie infolge der Neigung einzeln der Reihe nach nach vorn-unten rutschen. Da der Stechelevator 4 die Traghaken 6 mit Schweinen 2 mit einem bestimmten Mindestabstand fördert, kommen diese auch mit einem räumlichen und zeitlichen Mindestabstand der Reihe nach am Ende des Bereichs 12 an. Jeder ankommende Traghaken wird am Ende des Bereichs 12 bzw. am Beginn des daran anschließenden Bereichs 14 des Rohrbahnabschnitts 10 von einem Mitnehmer des Förderabschnitts 28a der Baueinheit 22 erfaßt und wird von dort mit definierter Geschwindigkeit entlang des zweiten Bereichs 14 gefördert. Somit ergibt sich ein definierter Abstand der Schweine 2 auf der Länge der Einwirkung der Baueinheit 22. Auf die Länge des Einwirkungsbereichs der Baueinheit 22 können die Schweine 2 unter optimalen Arbeitsbedingungen für die Schlachter abgestochen werden. Vom hinteren Ende der Baueinheit 22 rutschen die Traghaken 6 mit den Schweinen 2 frei auf dem dritten Bereich 15 weiter, wobei dieser gleichsam als Stauraum für abgestochene Schweine 2 vor der weiterführenden Rohrbahn 16 dient.

Die Ausführungsform gemäß Fig. 4 entspricht bis auf die nachfolgend zu beschreibenden Unterschiede der Ausführungsform gemäß Fig. 1 bis 3. Statt der Kette 28 mit Mitnehmern 40 ist ein endloser Keilriemen 28 vorgesehen. Demzufolge sind statt der Kettenräder 26a, 26b, 26c entsprechende Keilriemenscheiben vorgesehen. Der zweite Bereich 14 des Rohrbahnabschnitts 10 verläuft in Förderrichtung leicht nach unten geneigt, und zwar weniger stark als im ersten Bereich 12 und im dritten Bereich 15. Dementsprechend ist die Basisplatte 24 nicht ganz horizontal angeordnet, sondern verläuft entsprechend der Schrägstellung des zweiten Bereichs 14 in Bewegungsrichtung der Schweine 2 leicht nach unten geneigt. Hierdurch verringert sich die erforderliche Antriebsleistung des Riemenantriebs 22.

Die Verwendung des Keilriemens 28 anstelle eines prinzipiell auch möglichen Flachriemens hat den Vorteil, daß der Keilriemen 28 nicht axial in Richtung der Räderachsen wandern kann. Anstelle eines einfachen Keilriemens 28 ist es auch möglich, einen Mehrfachkeilriemen, einen Zahnriemen o.dgl. einzusetzen.

Man erkennt in Fig. 4, daß der Riemenabschnitt 28a mit seiner Außenseite reibschlüssig mit der zugewandten Innenseite des mittleren Traghakenabschnitts 36 in Eingriff steht. Da die Außenseite des Riemenabschnitts, entsprechend wie vorstehend für den Förderabschnitt 28a der Förderkette 28 beschrieben, gegenüber den mittleren Traghakenabschnitten 36 leicht seitlich versetzt ist, werden die Traghaken 6 durch das vertikal Gewicht des jeweiligen Schweins 2 mit einer gewtinschten Anpreßkraft gegen den Riemenabschnitt 28a gehalten.

Jeder ankommende Traghaken 6 kommt am Ende des ersten Bereichs 12 bzw. am Beginn des zweiten Bereichs 14 des Rohrbahnabschnitts 10 sofort in reibschlüssigen Kontakt mit dem Anfang des Riemenabschnitts 28a des Riemenantriebs 22. Bei der Ausbildung der Fördereinrichtungsbaueinheit als Riemenantrieb ergibt sich ein von Schwein 2 zu Schwein 2 nicht unbedingt gleicher Abstand der Schweine 2 auf die Länge der Einwirkung des Riemenantriebs, weil ja der Stechelevator 4 zuweilen auch Traghaken mit einem größeren als dem beschriebenen Mindestabstand fördert; die Schweineabstände bleiben jedoch während der Förderung durch den Riemenantrieb 22 im wesentlichen konstant und sind daher definiert.

## Patentansprüche

1. Verfahren zum Bewegen von mittels Traghaken (6) an einem Bewegungsbahnabschnitt (10) hängenden Schlachttieren (2) im Abstechbereich eines Schlachthofs,
dadurch gekennzeichnet,
daß die Schlachttiere (2) während des Abstechens mittels einer nahe dem Bewegungsbahnabschnitt (10) angeordneten, antreibend auf die Traghaken (6) einwirkenden Fördereinrichtungsbaueinheit (22) weiterbewegt werden.

2. Verfahren nach Anspruch 1,
dadurch gekennzeichnet,
daß die Schlachttiere (2) während des Abstechens mittels eines im wesentlichen parallel zu dem Bewegungsbahnabschnitt (10) verlaufenden Zugfördererabschnitts (28a) eines endlosen, antreibbaren, mit Mitnehmern (40) versehenen Zugförderers (28) der Fördereinrichtungsbaueinheit (22) weiterbewegt werden.

3. Verfahren nach Anspruch 2,
dadurch gekennzeichnet,
daß die Schlachttiere (2) mittels Mitnehmern (40) weiterbewegt werden, die gegen Federkraft beweglich an dem Zugförderer (28) angebracht oder in sich elastisch sind.

4. Verfahren nach Anspruch 1,
dadurch gekennzeichnet,
daß die Schlachttiere (2) während des Abstechens mittels eines im wesentlichen parallel zu dem Bewegungsbahnabschnitt (10) verlaufenden, reibschlüssig an den Traghaken (6) angreifenden Riemenabschnitts (28a) eines endlosen Antriebsriemens (28) der Fördereinrichtungsbaueinheit (22) weiterbewegt werden.

5. Verfahren nach einem der Ansprüche 1 bis 4,
dadurch gekennzeichnet,
daß die Schlachttiere (2) während des Abstechens leicht abwärts weiterbewegt werden.

6. Verfahren nach einem der Ansprüche 1 bis 5,
dadurch gekennzeichnet, daß die Schlachttiere (2) vor und nach dem Abstechen auf nach unten geneigten Bewegungsbahnbereichen (12; 15) bewegt werden.

## Claims

1. A method of moving slaughter animals suspended on a moving path section (10) by means of supporting hooks (6) in the sticking region of a slaughterhouse,
characterized in that the slaughter animals (2) are moved on during sticking by means of a conveyor unit (22) disposed in proximity of the moving path section (10) and having a driving effect on the supporting hooks (6).

2. A method according to claim 1,
characterized in that the slaughter animals (2) are moved on during sticking by means of a traction-type conveying section (28a) which extends substantially parallel to the moving path section (10) and is provided with pushers (40) and is part of an endless drivable traction-type conveyor (28) of the conveyor unit (22).

3. A method according to claim 2,
characterized in that the slaughter animals (2) are moved on by means of pushers (40) which are movably attached to the traction-type conveyor (28) against spring force or are provided with inherent elasticity.

4. A method according to claim 1,
characterized in that the slaughter animals (2) are moved on during sticking by means of a belt section (28a) of an endless driving belt (28) of the conveyor unit (22), said belt section (28a) extending substantially parallel to the moving path section (10) and frictionally engaging the supporting hooks (6).

5. A method according to any one of claims 1 to 4,
characterized in that the slaughter animals (2) are moved on during sticking in slightly downward direction.

6. A method according to any one of claims 1 to 5,
characterized in that the slaughter animals (2), prior to and after sticking, are moved on downwardly inclined moving path sections (12; 15).

**Revendications**

1. Procédé pour déplacer, au moyen de crochets de support (6), des animaux à abattre (2), suspendus à une partie (10) d'une voie de transport, dans la zone de saignée d'un abattoir, caractérisé en ce que les animaux à abattre (2) sont transportés, pendant la saignée, au moyen d'une unité de dispositif de convoyage (22), située à proximité de la partie de voie (10) et agissant de manière à entraîner les crochets de support (6).

2. Procédé selon la revendication 1, caractérisé en ce que les animaux à abattre (2) sont transportés, pendant la saignée, au moyen d'une partie (28a), à peu près parallèle à la partie (10) de la voie de transport, d'un convoyeur par traction (28), sans fin, motorisé, pourvu d'entraîneurs (40), de l'unité de dispositif de convoyage (22).

3. Procédé selon la revendication 2, caractérisé en ce que les animaux à abattre (2) sont transportés au moyen d'entraîneurs (40) qui sont placés mobiles, à l'encontre de ressorts, sur le convoyeur par traction (28), ou sont élastiques en soi.

4. Procédé selon la revendication 1, caractérisé en ce que les animaux à abattre (2) sont transportés, pendant la saignée, au moyen d'une partie de courroie (28a), à peu près parallèle à la partie de la voie de transport (10), agissant par friction sur les crochets de transport (6), d'une courroie d'entraînement (28) sans fin de l'unité de dispositif de convoyage (22).

5. Procédé selon l'une des revendications 1 à 4, caractérisé en ce que les animaux à abattre (2) sont légèrement descendus pendant la saignée.

6. Procédé selon l'une des revendications 1 à 5, caractérisé en ce que les animaux à abattre (2) sont déplacés avant et après la saignée, sur des zones (12 ; 15) de la voie de transport, inclinées vers le bas.

FIG. 1

FIG. 2

FIG. 3

FIG. 4